# EUROPÄISCHE PATENTSCHRIFT

(11) **EP 4 568 893 B1**
(45) Veröffentlichungstag und Bekanntmachung des Hinweises auf die Patenterteilung: **04.11.2026**
(21) Anmeldenummer: 23755379.7
(22) Anmeldetag: 11.08.2023
(51) Int. Cl.: B64G 1/22, F16F 15/00, B64G 1/64, F16F 15/28

(54) **TRÄGERVORRICHTUNG ZUM BEFESTIGEN EINER NUTZLAST IN EINEM RAUMFAHRZEUG**
CARRIER DEVICE FOR SECURING A PAYLOAD IN A SPACECRAFT
DISPOSITIF DE SUPPORT POUR FIXER UNE CHARGE UTILE DANS UN ENGIN SPATIAL

(30) Priorität: 12.08.2022 DE 102022208434
(43) Veröffentlichungstag der Anmeldung: 18.06.2025
(73) Patentinhaber: Fraunhofer-Gesellschaft zur Förderung der angewandten Forschung e.V., 80686 München (DE)
(72) Erfinder: RIESS, Sebastian, 64289 Darmstadt (DE); ATZRODT, Heiko, 64289 Darmstadt (DE); DROSTE, Marvin, 64289 Darmstadt (DE); MANUSHYNA, Daria, 64289 Darmstadt (DE); RAPP, Stephan, 80686 München (DE); SCHNEIDER, Roland, 22880 Wedel (DE); SAMOIL, Moritz, 28213 Bremen (DE)
(74) Vertreter: Pfenning, Meinig & Partner mbB
(86) Internationale Anmeldenummer: PCT/EP2023/072312
(87) Internationale Veröffentlichungsnummer: WO 2024/033532

(56) Entgegenhaltungen:
- WO-A1-2015/084025
- DE-A1- 102018 203 815
- DE-T5- 112009 001 816
- JP-A- 2013 137 102
- US-A- 5 670 758
- US-B2- 8 678 323

## Beschreibung

Diese Offenbarung betrifft eine Trägervorrichtung zum Befestigen einer Nutzlast in Raumfahrzeugen und ein Raumfahrzeug mit einer Trägervorrichtung zum Befestigen einer Nutzlast.

Zur Positionierung von Satelliten auf dem Orbit werden meistens Reaktionsräder eingesetzt. Aufgrund der Unwucht von Rotoren, Motorstörungen sowie Lagerungsungenauigkeiten stellen diese eine harmonische und breitbandige Anregungsquelle für mechanische Schwingungen für Satelliten dar. Diese durch die Anregungsquellen verursachten Mikro-Vibrationen können die Arbeit von sensiblen Apparaturen beeinträchtigen. Besonders bei optischen Instrumenten wie Spiegeln oder Kameras führt dies in der Regel zu einer Verschlechterung der Bildqualität. Aber auch Kommunikationsapparaturen können durch die Vibrationen negativ beeinflusst werden.

Die Minderung von Mikro-Vibrationen im Satellitenbetrieb stellt eine komplexe Fragestellung dar. Der Aufwand, die Mikro-Vibrationen zu mindern, ist sehr hoch. In den letzten Jahrzehnten wurden einige Ansätze zur Behandlung von Mikro-Vibrationen erarbeitet. Ein verbreiteter Ansatz zur Minderung von Mikro-Vibrationen besteht in der Verwendung von Isolierungssystemen mit viskoelastischen Materialien. Eine Variante besteht darin, die Schnittstelle zwischen optischen Instrumenten (Spiegeln oder Kameras) und einer Satellitenstruktur mit Elementen aus viskoelastischem Material zu gestalten, um die Mikro-Vibrationen von Reaktionsrädern oder anderen Anregungsquellen zu beseitigen. Weitere Systeme sehen die Entwicklung zusätzlicher Vorrichtungen zur Schwingungsisolation vor wie beispielsweise Isolationsplattformen. Darüber hinaus wird in aktuellen Forschungsvorhaben die Kombination von passiven Schwingungsminderungssystemen (Isolatoren aus Elastomeren) und aktiven Schwingungsminderungssystemen (mit Verwendung piezoelektrischer Aktuatoren) untersucht.

Aus dem Stand der Technik ist beispielsweise die US 5 670 758 A bekannt, die einen Schallschutz offenbart, um Nutzlasten von ausfahrbaren Trägerraketen wirksam vor Lärmemissionen des Raketenantriebssystems zu schützen, die zu Schäden an den Nutzlasten führen können. Zu diesem Zweck sind auf einen definierten Frequenzbereich abgestimmte Schallabsorber vorgesehen, die in Schaumstoffmatten angeordnet sind, die an den Innenseiten der Nutzlastverkleidung angebracht sind. Die Schallabsorber bestehen aus einem becherförmigen Unterteil und einem Oberteil mit einem Horn. Das Horn verjüngt sich in einer gekrümmten konischen Form von einem größeren Durchmesser zu einem kleineren Durchmesser und ragt um einen definierten Abstand von dessen Boden in den unteren Teil hinein. Schlitze zur Ableitung der im Horn auftretenden gerichteten Strömungsenergie sind in der Wandung des Horns im Bereich des kleineren Durchmessers angeordnet.

Die DE112009001816T5 zeigt gemäß Zusammenfassung ein aktives Dämpfungssystem zur Verwendung im Zusammenhang mit einem Vibrationsisolierungssystem. Hierbei weist das aktive Dämpfungssystem folgendes auf:
- einen Aktuator, der am Boden oder an einer Basisplattform gegenüber einer Nutzlast angebracht ist, um die dynamischen Kräfte auszugleichen, die auf das Vibrationsisolierungssystem wirken;
- eine Zwischenmasse, die an dem Aktuatorsystem abgestützt wird, um als Stabilitätspunkt zu wirken, in Bezug auf den die dynamischen Kräfte gedämpft und von der Nutzlast isoliert werden können;
- ein passives Dämpfungselement, das an einem Ende an die Nutzlast und an einem gegenüberliegenden Ende an die Zwischenmasse gekoppelt ist, die als Stabilitätspunkt wirkt.

Ferner offenbart die DE 10 2018 203815 A1 eine Dämmungsvorrichtung zur akustischen Schwingungsdämmung einer Klimaanlage eines Fahrzeugs. Die Dämmungsvorrichtung umfasst eine Trägeranordnung und mindestens einen mechanischen Resonator, der mit der Trägeranordnung verbunden ist, wobeider mindestens eine mechanische Resonator mindestens einen Verbindungsschenkel umfasst, der mit mindestens einer Seitenwand der Trägeranordnung verbunden ist, und- die Trägeranordnung eine Vielzahl von Hohlräumen aufweist, die durch benachbarte Wände getrennt sind, wobei der mindestens eine mechanische Resonator darin verbunden ist, und wobei der Resonator eine Schwingungsmode aufweist, die überwiegend durch eine Schwingbewegung der Trägeranordnung in einer senkrechten oder normalen Richtung, bezogen auf eine nicht angeregte Position der Trägeranordnung, anregbar ist.

Die JP 2013 137102 A offenbart eine Vorrichtung zur Isolierung von Niederfrequenzschwingungen, die für den Einsatz in einem Schwingungsisolierungssystem für Raumfahrzeuge geeignet ist. Die Vorrichtung zur Isolierung von Niederfrequenzschwingungen umfasst einen Dreiparameter-Schwingungsisolator und eine serielle Feder zur Reduzierung der Bruchfrequenz. Eine vorbestimmte axiale Steifigkeit der serienmäßigen Feder zur Reduzierung der Bruchfrequenz ist geringer als eine vorbestimmte laterale Steifigkeit der serienmäßigen Feder zur Reduzierung der Bruchfrequenz. Der Dreiparameter-Schwingungsisolator umfasst einen Primärbalg mit einer vorbestimmten axialen Steifigkeit und einer vorbestimmten seitlichen Steifigkeit, wobei die vorbestimmte axiale Steifigkeit des Primärbalgs geringer ist als die vorbestimmte seitliche Steifigkeit des Primärbalgs.

Die meisten betrachteten Ansätze zeigen ein hohes Potenzial für Schwingungsminderung an Satellitenstrukturen, haben jedoch die Nachteilen, dass sie meist sehr komplex (und damit fehleranfällig) sind, eine hohe Masse besitzen und im Falle der aktiven Schwingungsminderungssystemen nur schmalbandig wirken.

Die Aufgabe, die dieser Offenbarung zugrunde liegt, ist es daher eine verbesserte Vorrichtung zur Verringerung von Mikro-Vibrationen für Raumfahrzeuge zu beschreiben.

Diese Aufgabe wird gelöst durch die Trägervorrichtung gemäß Anspruch 1. Bevorzugte Ausführungsformen werden in den abhängigen Ansprüchen beschrieben.

Die Trägervorrichtung ist ausgebildet zum Befestigen einer Nutzlast in Raumfahrzeugen. Die Trägervorrichtung umfasst dabei eine Trägeroberfläche, wobei die Trägeroberfläche mit einer Anordnung von lokalen Resonatoren versehen ist, die jeweils mindestens eine schwingende Masse und ein Federelement, das die schwingende Masse mit der Trägeroberfläche verbindet, umfassen und darauf abgestimmt sind, mindestens eine Resonanz in einem relevanten Frequenzbereich um eine erste relevante Frequenz aufzuweisen, wobei die Anordnung der lokalen Resonatoren mindestens ein Stoppband für elastische Wellenausbreitung in der Trägeroberfläche um mindestens die erste relevante Frequenz erzeugt.

Durch die Anordnung lokaler Resonatoren und deren Interaktion mit der umgebenden Struktur ergibt sich in bestimmten Frequenzbereichen eine negative effektive Masse, die dafür sorgt, dass sich eine Ausbreitung mechanischer Schwingungen in diesem Frequenzbereich stark behindert wird. Frequenzbereiche, in denen die Wellenausbreitung nur stark abgeschwächt stattfindet, werden oft auch als Stoppbänder bezeichnet. Eine Anordnung von solchen lokalen Resonatoren auf einer Struktur wird im Allgemeinen als vibroakustisches Metamaterial bezeichnet. Um ein stark ausgeprägtes Stoppband zu erzeugen, müssen die lokalen Resonatoren auf die gleiche Resonanzfrequenz abgestimmt sein. Durch geschicktes Design der Resonatoren lässt sich dieser Effekt für eine Reduzierung von Schwingung und Vibration ausnutzen.

Die Kombination von vibroakustischen Metamaterialien mit Trägervorrichtungen für Raumfahrzeuge liegt ferner die Erkenntnis zu Grunde, dass vibroakustische Metamaterialien trotz der schwingenden Masse mit den Anforderungen an Raumfahrzeuge zu vereinbaren sind. Dies ist überraschend, weil es einem Paradigmenwechsel in der Raumfahrt entspricht. Aufgrund starker Schockbelastungen, die auf Raumfahrzeuge während eines Starts mit einer Trägerrakete wirken und die die Resonatoren mit einem Vielfachen der Erdbeschleunigung beschleunigen, wurden Raumfahrzeuge bisher so steif wie möglich konstruiert. Die Anordnung lokaler Resonatoren wie sie oben beschrieben ist, ist trotz der schwingenden Masse jedoch geeignet für die Verwendung in Raumfahrzeugen. Zudem sind die lokalen Resonatoren nicht nur geeignet, Mikro-Vibrationen während des Betriebs eines Raumfahrzeuges zu reduzieren, sondern auch stärkere Vibrationen, die beim Start einer Trägerrakete auftreten. Da diese stärkeren Vibrationen mit bis zu 150g auf die Raumfahrzeuge wirken, bieten die lokalen Resonatoren zusätzlich einen Schutz der Trägervorrichtung und damit der Raumfahrzeuge gegen Beschädigung beim Start.

Im Folgenden werden bevorzugte Ausführungsformen der Trägervorrichtung beschrieben.

Der in dieser Offenbarung verwendete Begriff Raumfahrzeug umfasst Satelliten, Sonden, Rover und auch Raumstationen, jedoch keine Trägerraketen.

Unter Nutzlast fallen im Rahmen dieser Offenbarung insbesondere sensible Apparaturen, deren korrektes Funktionieren durch Vibrationen beeinträchtigt werden kann. Beispiele für solche sensiblen Apparaturen sind Kommunikations- und Messsysteme. Die eingangs schon erwähnten optischen Apparaturen fallen hierbei unten den Begriff der Messsysteme.

Die Angabe "zur Verwendung in einem Raumfahrzeug" umfasst, dass die Trägervorrichtung aus raumfahrtzugelassenen Materialen besteht.

Jeder lokale Resonator umfasst jeweils mindestens eine schwingende Masse und ein Federelement. Die schwingende Masse kann eine beliebige Form und Abmessung haben. Die Masse der schwingenden Masse ist ein wichtiger Faktor bei der Frequenzabstimmung des Resonators. Die schwingende Masse kann aus demselben Material bestehen wie das umgebende Bauteil. Sie kann aber auch aus einem anderen Material bestehen. Das Federelement hat elastische Eigenschaften. Es verbindet die schwingende Masse mit der Trägeroberfläche. Es kann sich um eine direkte Verbindung oder um eine indirekte Verbindung über weitere Bauteile handeln. Das Federelement kann einteilig mit der schwingenden Masse, einteilig mit der Trägervorrichtung oder einteilig sowohl mit der Trägervorrichtung und der schwingenden Masse ausgebildet sein. Es kann sich ebenso um ein einzelnes elastisches Element, wie zum Bei-spiel um eine Blattfeder, handeln. Das Federelement kann eine beliebige Form und Abmessung haben. Insbesondere sind Form und Abmessung des Federelements wichtige Faktoren bei der Frequenzabstimmung des Resonators. Das Federelement kann aus demselben Material bestehen wie das umgebende Bauteil. Es kann aber auch aus einem anderen Material, insbesondere aus einem Elastomer bestehen.

Jeder einzelne Resonator besitzt mindestens eine erste für das Stoppband relevante Resonanzfrequenz. Bei einer Anregung mit einer Resonanzfrequenz wird die Amplitude der Schwingung des Resonators maximal. Die Resonanzfrequenz eines Resonators wird dabei durch die Eigenschaften der gesamten Einheitszelle bestimmt. Es spielt also neben der Masse der schwingenden Masse und des Federelements und den elastischen Eigenschaften des Federelements auch die Geometrie, Masse und Elastizität der umgebenden Strukturen eine Rolle. Eine Frequenzabstimmung der Resonatoren kann also durch Variation dieser Eigenschaften erfolgen.

Alle lokalen Resonatoren des Metamaterials sind auf die gleiche, oder zumindest annähernd gleiche Resonanzfrequenz abgestimmt. So entsteht ein Stoppband um diese Frequenz, das eine Wellenausbreitung in der Trägeroberfläche stark abschwächt. Durch die Abstimmung der Resonanzfrequenz der lokalen Resonatoren lässt sich so ein Stoppband gestalten, das vorteilhafte Eigenschaften für ein vibroakustisches Verhalten der Trägervorrichtung aufweist. Weisen die Resonatoren mehrere Resonanzfrequenzen in dem relevanten Frequenzbereich auf, so können mehrere Stoppbänder um diese entstehen. Diese mehreren Stoppbänder können getrennt Schwingungen in unterschiedlichen Frequenzbereichen reduzieren oder sich überlappen und so ein breites Stoppband bilden.

In einer bevorzugten Ausführungsform umfasst die Trägervorrichtung eine Trägerplatte, wobei die Trägeroberfläche eine Oberfläche der Trägerplatte ist. Dies ist besonders vorteilhaft, um Schwingungsübertragungen der Trägerplatte zu reduzieren und so mit der Trägerplatte verbundene Nutzlast vor Schwingungen zu schützen.

In einer anderen Ausführungsform umfasst die Trägervorrichtung eine Basisträgerplatte und eine Trägerplatte, wobei die Trägerplatte insbesondere parallel zur Basisträgerplatte angeordnet ist. Zudem umfasst die Trägerplatte dieser Ausführungsform eine isostatische Lagerungsanordnung, die die Basisträgerplatte und die Trägerplatte mechanisch miteinander verbindet, wobei die Resonatoren auf der Basisträgerplatte und/oder der Trägerplatte angebracht sind. Diese Anordnung ist vorteilhaft, weil sie eine isostatische Entkopplung von Basisträgerplatte und Trägerplatte ermöglicht, d.h. eine freie Ausdehnung der Platten auf Grund von thermischen Veränderungen ermöglicht. Zusätzlich reduziert die Anordnung lokaler Resonatoren eine Schwingungsübertragung von der Basisträgerplatte auf sensible Apparaturen der Nutzlast, die auf der Trägerplatte angeordnet sind. Dies funktioniert sowohl bei einer Anordnung der lokalen Resonatoren auf der Basisträgerplatte als auch auf der Trägerplatte.

In einer weiteren bevorzugten Ausführungsform der Trägervorrichtung mit Trägerplatte weist die Trägerplatte, zusätzlich oder alternativ, eine Ankopplungsschnittstelle zur Befestigung der Nutzlast auf. Ankopplungsschnittstellen können dabei mechanische Vorrichtungen, wie Bohrlöcher o. Ä. sein, mit denen die Nutzlast mit einer Trägerplatte verbunden werden kann. Bei der Verwendung von Klebstoffen zur Befestigung kann die Ankopplungsschnittstelle auch ein Bereich der Oberfläche der Trägerplatte sein, auf dem der Klebstoff aufgetragen wird.

In einer weiteren Ausführungsform der Trägervorrichtung mit Trägerplatte ist zusätzlich oder alternativ die Anordnung lokaler Resonatoren auf einer Oberfläche der Basisträgerplatte um eine erste Ankopplungsschnittstelle, über die die Basisträgerplatte und ein Lagerungselement der isostatischen Lagerungsanordnung miteinander verbunden sind, angeordnet und/oder die Anordnung lokaler Resonatoren auf einer Oberfläche der Trägerplatte um eine zweite Ankopplungsschnittstelle, über die die Trägerplatte und ein Lagerungselement der isostatischen Lagerungsanordnung miteinander verbunden sind, angeordnet. Eine Anordnung der lokalen Resonatoren um die Ankopplungsschnittstellen ist besonders vorteilhaft zur Reduzierung der Schwingungsübertragung von Basisträgerplatte auf die Trägerplatte.

In einer weiteren Ausführungsform der Trägervorrichtung ist, alternativ oder zusätzlich, die Anordnung der lokalen Resonatoren periodisch. Eine periodische Struktur ergibt sich aus der räumlichen Wiederholung einer Einheitszelen der lokalen Resonatoren. Die schwingende Masse, das Federelement und ein gewisser Bereich des umgebenden Materials der Trägervorrichtung bilden die Einheitszelle des Resonators.

In einer weiteren Variante bildet sich durch die periodische Anordnung der lokalen Resonatoren aufgrund von Bragg-Streuung mindestens ein weiteres Stoppband für elastische Wellenausbreitung um mindestens eine weitere Frequenz aus. Dies ist vorteilhaft um Schwingungen in einem weiteren Frequenzbereich zu unterdrücken.

In einer anderen Ausführungsform ist ein Abstand der lokalen Resonatoren zueinander kleiner als eine halbe Wellenlänge der ersten relevanten Frequenz. Durch die Anordnung der lokalen Resonatoren mit Abständen kleiner oder gleich einer halben Wellenlänge kann erreicht werden, dass sich mindestens ein weiteres Stoppband in der Trägervorrichtung ausbildet, das durch Bragg-Streuung an der Anordnung entsteht. Auf diese Weise lassen sich ein zusätzliches Stoppband und eine weitere Frequenz ausnutzen. Die Anordnung der lokalen Resonatoren ist dabei bevorzugt eine 2-dimensionale Anordnung auf der Oberfläche.

In einer weiteren Ausführungsform der Trägervorrichtung liegt zusätzlich oder alternativ die erste relevante Frequenz in einem Frequenzbereich zwischen 50 Hz und 10000 Hz. In einer Variante dieser Ausführungsform liegt die relevante Frequenz in einem Frequenzbereich zwischen 50 und 500 Hz.

In einer anderen Ausführungsform ist, zusätzlich oder alternativ, die Anordnung von lokalen Resonatoren so beschaffen und/oder sind die lokalen Resonatoren so ausgebildet, dass mehrere Stoppbänder für die elastische Wellenausbreitung in der Trägeroberfläche erzeugt werden. Weitere Stoppbänder lassen sich erzeugen, in dem die lokalen Resonatoren so ausgebildet sind, dass sie mehrere Resonanzfrequenzen aufweisen. In Varianten ist zusätzlich oder alternativ eine Anordnung der lokalen Resonatoren so gewählt, dass sich zusätzliche Resonanzfrequenzen für die Anordnung ergeben, indem Resonatoren mit verschiedenen relevanten Frequenzen in der Anordnung vorhanden sind oder sich weitere Stoppbänder durch die Form der Anordnung ergeben.

In einer weiteren Ausführungsform weisen die einzelnen Resonatoren, zusätzlich oder alternativ, eine geringfügig unterschiedliche Frequenzabstimmung auf, so dass das mindestens eine Stoppband verbreitert wird.

Im Folgenden werden Ausführungsbeispiele der Trägervorrichtung beschrieben, die besonders widerstandsfähig ausgebildet sind, um Schockbelastungen zu überstehen.

In einer dieser Ausführungsform der Trägervorrichtung sind die lokalen Resonatoren, zusätzlich oder alternativ, ausgebildet, Schockbelastungen mit Beschleunigungen bis zu 2000-mal der Erdbeschleunigung standzuhalten. Dieser Ausführungsform liegt die Erkenntnis zu Grunde, dass Raumfahrzeuge oft zunächst mittels Trägerraketen in den Weltraum gebracht werden müssen. Insbesondere beim Start wirken dabei (kurzzeitig) Beschleunigungen bis zu 2000-mal der Erdbeschleunigung auf die lokalen Resonatoren. Die lokalen Resonatoren müssen daher dafür ausgebildet sein, diesen Beschleunigung Stand zu halten, um unbeschadet in den Weltraum gelangen zu können.

In einer Ausführungsform überlappt zumindest ein Teil einer Ankopplungsschnittstelle zur Befestigung eines lokalen Resonators auf der Trägeroberfläche mit einer zur Trägeroberfläche lotrechten Projektion der schwingenden Masse auf die Trägeroberfläche. Dies ist vorteilhaft für eine Kräfteverteilung über die Ankopplungsschnittstelle insbesondere bei Schockbelastungen des Resonators durch äußere Stöße.

In einer anderen Ausführungsform sind zusätzlich oder alternativ eine oder mehrere Ankopplungsschnittstellen zur Befestigung eines lokalen Resonators symmetrisch bzgl. einer Achse, die senkrecht zur Trägeroberfläche und durch einen Schwerpunkt der schwingenden Masse des lokalen Resonators verläuft, angeordnet. Durch die symmetrische Anordnung erfolgt eine bessere Kräfteverteilung auf die Ankopplungsschnittstellen bei Schockbelastung. Dies ist insbesondere beim Transport der Trägervorrichtung in den Weltraum vorteilhaft. Die Symmetrie bezeichnet hier vor allem die Drehsymmetrie im weiteren Sinne, durch die durch Drehung um einen Winkel größer als 0° und kleiner als 360° die Ankopplungsschnittstelle auf sich selbst abgebildet werden kann.

In einer anderen Ausführungsform ist zusätzlich oder alternativ das Federelement eines lokalen Resonators rotationssymmetrisch bzgl. einer Achse, die senkrecht zur Trägeroberfläche und durch einen Schwerpunkt der schwingenden Masse des lokalen Resonators verläuft, ausgebildet. Auch dieses Merkmal sorgt für eine bessere Verteilung von Kräften bei Stoßbeschleunigungen. Rotationssymmetrisch ist hier in einem weiten Sinn zu verstehen und schließt auch solche Federelemente ein, die durch Drehung um einen Winkel zwischen 0° und 360° um die Achse auf sich selbst abgebildet werden.

Im Folgenden werden bevorzugte Ausführungsformen beschrieben, die ein zusätzliches Führungselement umfassen. Diese Ausführungsformen können auch in anderen Bereichen als der Raumfahrt eingesetzt werden und auch in Vorrichtungen, die keine Trägervorrichtungen sind.

In einer dieser Ausführungsformen weist ein lokaler Resonator ein zusätzliches Führungselement auf, das Schwingungen des lokalen Resonators in einem zweiten relevanten Frequenzbereich reduziert und/oder Schwingungen des lokalen Resonators außerhalb einer Vorzugsschwingrichtung reduziert. Diesem Ausführungsbeispiel liegt die Idee zugrunde, dass insbesondere Stoßbelastungen Schwingungsmoden der lokalen Resonatoren anregen, durch die Kräfte auf die Ankopplungsschnittstellen zwischen Trägeroberfläche und lokalem Resonator übertragen werden, die zu einem Loslösen des lokalen Resonators von der Trägeroberfläche führen können. Durch das Führungselement werden diese Schwingungsmoden unterdrückt.

In besonders vorteilhafter Variante der Ausführungsform mit zusätzlichem Führungselement weist das Führungselement eine höhere Steifigkeit als das Federelement auf.

In einer weiteren Variante umfasst zusätzlich oder alternativ der zweite relevante Frequenzbereich Frequenzen die unterhalb des (ersten) relevanten Frequenzbereichs liegen. Dies ist vorteilhaft, da Untersuchungen hier gezeigt haben, dass besonders die niederfrequenten Schwingungsmoden zu einer Ablösung des lokalen Resonators von der Trägeroberfläche führen können.

In einer anderen Variante ist das Führungselement zusätzlich oder alternativ so ausgebildet, dass laterale Schwingungsmoden unterdrückt werden. Insbesondere die lateralen Schwingungsmoden sind für ein Ablösen der lokalen Resonatoren von der Trägeroberfläche verantwortlich.

In einer anderen Ausführungsform weist zusätzlich oder alternativ das Federelement einer der lokalen Resonatoren einen Hohlraum auf und das Führungselement ist innerhalb des Hohlraums angeordnet.

In einer Variante dieser Ausführungsform ist das Federelement mit dem Hohlraum ein Elastomerhohlzylinder und/oder das Führungselement ein metallischer Pin, der innerhalb des Elastomerhohlzylinders angeordnet ist.

In einer anderen Ausführungsform weist ein lokaler Resonator zusätzlich ein Ausdehnungsbegrenzungselement auf, das eine Ausdehnung des Federelementes entlang mindestens einer Richtung begrenzt. Diese Ausführungsform ist besonders vorteilhaft, weil sie eine Gefahr einer Beschädigung des Federelementes durch eine zu starke Dehnung insbesondere während eines Starts einer Trägerrakete reduziert. Das Ausdehnungsbegrenzungselement erfüllt damit die Funktion eines Schocksicherungselementes.

In einer Variante dieser Ausführungsform umfasst das Ausdehnungsbegrenzungselement eine Begrenzungsoberfläche, die relativ zum Federelement so angeordnet ist, dass die Ausdehnung des Federelements in der mindestens einen Richtung begrenzt wird. In einer weiteren Variante sind zusätzlich oder alternativ das Führungselement und das Ausdehnungsbegrenzungselement mechanisch miteinander verbunden.

Zusätzlich zur Trägervorrichtung wird im Folgenden auch ein Raumfahrzeug beschrieben.

Das Raumfahrzeug umfasst eine Trägervorrichtung nach einem der vorhergehend beschriebenen Ausführungsbeispiele. Diese Ausführungsform teilt alle Vorteile wie die Trägervorrichtung selbst.

In einem besonders vorteilhaften Ausführungsbeispiel des Raumfahrzeugs weist das Raumfahrzeug eine Nutzlast auf, wobei die Nutzlast an einer Nutzlastankopplungsschnittstelle mit der Trägeroberfläche mechanisch verbunden ist. Ferner weist das Raumfahrzeug ein schwingungsgenerierendes Element auf, das an einer Elementankopplungsschnittstelle mit der Trägeroberfläche mechanisch verbunden ist, wobei zumindest ein Teil der Anordnung der lokalen Resonatoren zwischen der Nutzlastankopplungsschnittstelle und der Elementankopplungsstelle angeordnet ist.

Im Folgenden werden die beigefügten Figuren beschrieben. Dazu wird zunächst eine Zusammenfassung des in den Figuren Gezeigten gegeben.
- Fig. 1: zeigt eine erste Trägervorrichtung gemäß der Idee dieser Offenbarung;
- Fig. 2: zeigt eine zweite Trägervorrichtung gemäß der Idee dieser Offenbarung;
- Fig. 3: zeigt einen u-förmigen lokalen Resonator zur Verwendung in Verbindung mit der Trägervorrichtung aus Fig. 1 oder Fig. 2;
- Fig. 4a: zeigt eine Seitenansicht eines röhrenförmigen Resonators zur Verwendung in Verbindung mit der Trägervorrichtung aus Fig. 1 oder Fig. 2;
- Fig. 4b: zeigt eine Draufsicht des röhrenförmigen Resonators aus Fig. 4a;
- Fig. 5a: zeigt einen Querschnitt entlang einer Längsachse durch einen lokalen Resonator mit einem Führungselement;
- Fig. 5b: zeigt eine Unterseite des in Fig. 5a dargestellten lokalen Resonators;
- Fig. 6: zeigt einen Querschnitt durch eine weitere Ausführungsform eines Resonators mit Führungselement; und
- Fig. 7: zeigt eine schematische Darstellung eines Raumfahrzeuges mit einer Trägervorrichtung gemäß der Idee dieser Offenbarung.

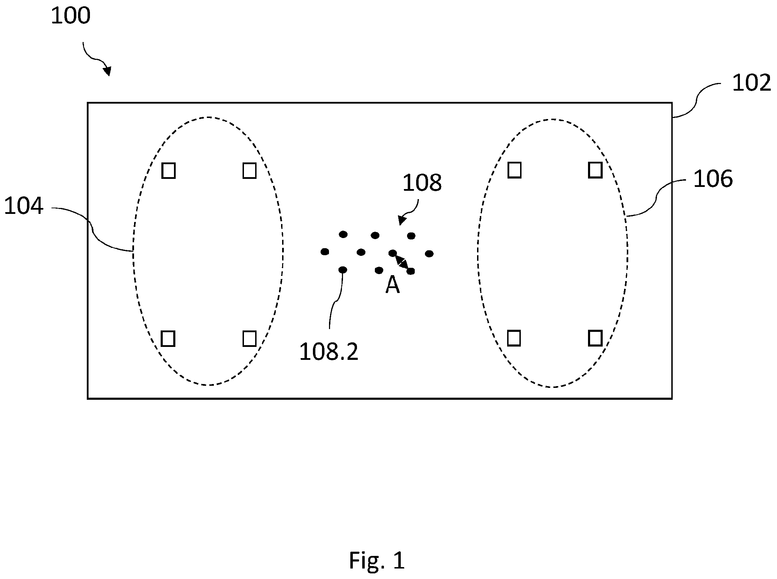

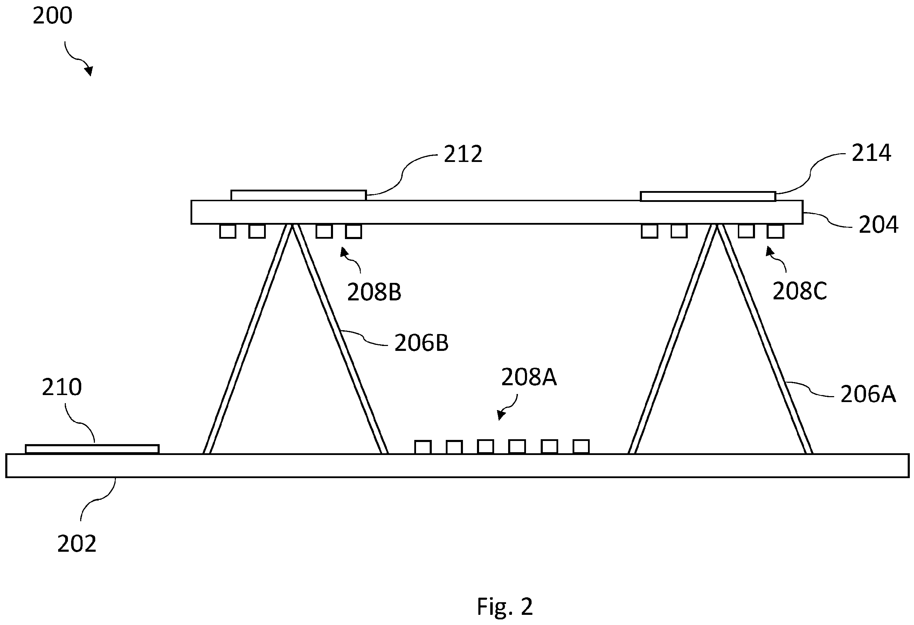

Im Folgenden wird das in den Figuren Dargestellte im Detail beschrieben. Zunächst werden dabei Trägervorrichtungen gemäß der Idee dieser Offenbarung mit Bezug auf Fig. 1 und Fig. 2 beschrieben.

Fig. 1 zeigt eine erste Trägervorrichtung 100 zum Befestigen einer Nutzlast in Raumfahrzeugen gemäß der Idee dieser Offenbarung.

Die Trägervorrichtung umfasst eine Trägeroberfläche 102, die Teil einer Trägerplatte ist, wobei die Trägeroberfläche mit einer Anordnung 108 von lokalen Resonatoren 108.2 versehen ist. Wie später noch im Detail gezeigt werden wird, umfassen die lokalen Resonatoren 108.2 dabei jeweils eine schwingende Masse und ein Federelement, das die schwingende Masse mit der Trägeroberfläche 102 verbindet. Ferner sind die lokalen Resonatoren 108.2 darauf abgestimmt, mindestens eine Resonanz in einem relevanten Frequenzbereich um eine erste relevante Frequenz aufzuweisen, wobei die Anordnung 108 der lokalen Resonatoren 108.2 mindestens ein Stoppband für elastische Wellenausbreitung in der Trägeroberfläche 102 um mindestens die erste relevante Frequenz erzeugt.

Die in Fig. 1 dargestellte Anordnung der lokalen Resonatoren ist periodisch. Insbesondere ist ein Abstand A der lokalen Resonatoren zueinander kleiner als eine halbe Wellenlänge der ersten relevanten Frequenz ist. Hierdurch wird begünstigt, dass durch die periodische Anordnung der lokalen Resonatoren aufgrund von Bragg-Streuung mindestens ein weiteres Stoppband für elastische Wellenausbreitung um mindestens eine weitere Frequenz ausbildet.

Zudem umfasst die hier dargestellte Trägervorrichtung eine erste Ankopplungsschnittstelle 104 und eine zweite Ankopplungsschnittstelle 106. Die Ankopplungsschnittstelle 104 dient zur Befestigung von Nutzlast. Dies sind im vorliegenden Fall insbesondere gegenüber Schwingungen sensible Apparaturen, wie Mess- und Telekommunikationssysteme. Die Ankopplungsschnittstelle 106 ist ausgebildet für die Befestigung von schwingungsgenerierenden Apparaturen bspw. eines Reaktionsrades. Da Nutzlast und Reaktionsrad in diesem Fall mit der gleichen Oberfläche 102 der Trägerplatte verbunden wären, würden vom Reaktionsrad generierte Vibrationen über die Oberfläche auf die Nutzlast übertragen werden. Durch die Anordnung 108 der lokalen Resonatoren und von diesem ausgebildeten Stoppband werden Vibrationen mit einer Frequenz, die in den Bereich des Stoppbandes fällt jedoch effektiv verringert.

Vorteilhaft kann es jedoch auch sein, schwingungsgenerierende Elemente und sensible Nutzlast auf unterschiedlichen Trägerplatten anzuordnen. Solch eine Trägervorrichtung wird im Folgenden mit Bezug auf Fig. 2 beschrieben.

Fig. 2 zeigt eine zweite Trägervorrichtung 200 gemäß der Idee dieser Offenbarung.

Die Trägervorrichtung 200 umfasst eine Basisträgerplatte 202 und eine dazu parallel angeordnete Trägerplatte 204. Basisträgerplatte 202 und Trägerplatte 204 sind mechanisch verbunden durch eine isostatische Lagerungsanordnung, die zwei Bipods 206A und 206B umfasst. Weiterhin umfasst die Basisträgerplatte 202 eine Ankopplungsschnittstelle 210 für ein schwingungsgenerierendes Element und zwei Ankopplungsschnittstellen 212 und 214 für sensible Nutzlast. Nutzlast und schwingungsgenerierendes Element sind durch diese Anordnung bereits auf zwei unterschiedlichen Trägerplatten angeordnet. Vibrationen können sich aber dennoch über die zwei Bipods 206A und 206B von der Basisträgerplatte 202 auf die Trägerplatte 204 übertragen. Aus diesem Grund sind auf der Trägervorrichtung 200 insgesamt drei Anordnungen von lokalen Resonatoren angeordnet. Eine erste Anordnung 208A ist auf einer Oberseite der Basisträgerplatte 202 angeordnet. Eine zweite Anordnung 208B und eine dritte Anordnung 208C sind auf einer Unterseite der Trägerplatte 204 angeordnet. Die zweite Anordnung 208B und eine dritte Anordnung 208C sind dabei jeweils um eine der beiden Ankopplungsschnittstellen, über die die Trägerplatte und einer der Bipods der isostatischen Lagerungsanordnung miteinander verbunden sind, angeordnet. Diese Anordnung ist besonders vorteilhaft, um eine Schwingungsübertragung im jeweiligen Frequenzbereich der Anordnungen der lokalen Resonatoren von der Basisträgerplatte auf die Trägerplatte zu reduzieren.

Im Folgenden werden verschiedene Ausführungsbeispiele von lokalen Resonatoren, die zusammen mit den oben beschriebenen Trägervorrichtungen verwendet werden können, beschrieben.

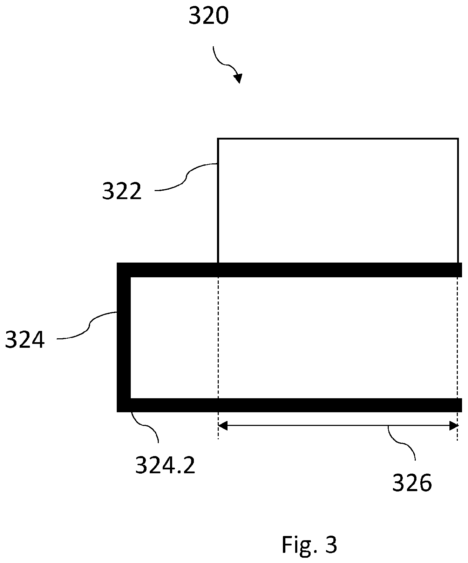

Fig. 3 zeigt einen u-förmigen lokalen Resonator 320 zur Verwendung in Verbindung mit der Trägervorrichtung aus Fig. 1 oder Fig. 2.

Der u-förmige Resonator 320 umfasst eine schwingende Masse 322 und ein Federelement 324. Das Federelement 324 ist u-förmig ausgeprägt und umfasst eine Unterseite 324.2 mittels der der Resonator 320 an der Trägeroberfläche befestigt werden kann. Die Befestigung kann beispielsweise mittels eines Klebstoffes aus weltraumzugelassenem Material erfolgen. Eine Klebefläche an der Unterseite 324.2 bildet dann eine Ankopplungsschnittstelle zwischen Trägeroberfläche und Resonator 320 aus. Das Federelement 324, das die schwingende Masse 322 mit der Trägeroberfläche verbindet, ist so ausgebildet, mindestens eine Resonanz in einem relevanten Frequenzbereich um eine erste relevante Frequenz aufzuweisen. Durch eine Anpassung bspw. eines Materials und einer Materialdicke des Federelementes 324 sowie der Masse der schwingenden Masse 322 ist es möglich, die erste relevante Frequenz in einem Frequenzbereich zwischen 50 Hz und 10000 Hz, insbesondere zwischen 50 und 250 Hz, durchzustimmen.

Weiterhin zeigt Fig. 3 einen Überlapp 326 der Ankopplungsschnittstelle und einer lotrechten Projektion der schwingenden Masse auf die Trägeroberfläche. Durch den Überlapp werden die durch Schockbelastungen entstehenden Kräfte (beispielsweise beim Start einer Trägerrakete) vorteilhaft über die Ankopplungsschnittstelle verteilt. So kann der lokale Resonator auch Schockbelastungen mit Beschleunigungen bis zu 2000-mal einer Erdbeschleunigung standhalten.

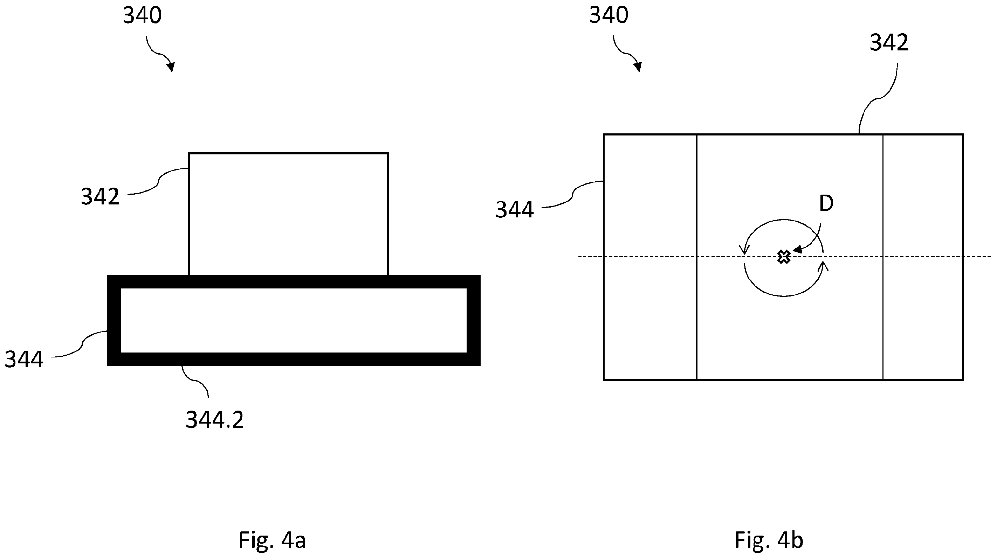

Fig. 4a zeigt eine Seitenansicht eines röhrenförmigen Resonators 340 zur Verwendung in Verbindung mit der Trägervorrichtung aus Fig. 1 oder Fig. 2. Fig. 4b zeigt eine Draufsicht des röhrenförmigen Resonators 340 aus Fig. 4b.

Der röhrenförmige Resonator 340 umfasst eine schwingende Masse 342, das auf einem röhrenförmigen Federelement 344 angeordnet ist. In dem hier gezeigten Beispiel wird die Röhrenform durch einen Metallstreifen gebildet, der zu einer Röhre mit rechteckigem Querschnitt gebogen ist. Das röhrenförmige Federelement 344 umfasst eine Unterseite 344.2, mittels der der lokale Resonator beispielsweise mit weltraumzugelassenem Klebstoff auf der Trägeroberfläche einer Trägervorrichtung gemäß der Idee dieser Offenbarung angebracht werden kann. Eine Ankopplungsschnittstelle zwischen Resonator 340 und Trägeroberfläche wird dann durch die mit Klebstoff bedeckte Trägeroberfläche gebildet. In der in Fig. 4b gezeigten Draufsicht ist eine vorteilhafte Drehsymmetrie bzgl. dieser Ankopplungsschnittstelle und einer lotrecht zur Trägeroberfläche und durch einen Massenschwerpunkt der schwingenden Masse 342 verlaufenen Achse D zu sehen. Durch eine Drehung um einen Drehwinkel von 180° wird die Ankopplungsschnittstelle dabei wieder in sich selbst überführt. Dies führt zu einer gleichmäßigeren Kraftverteilung bei Auslenkungen der schwingenden Masse und ist besonders vorteilhaft bei Schockbelastungen des Resonators 340 bspw. während des Starts einer Trägerrakete.

Vorteilhaft ist zudem, dass das Federelement 344 rotationssymmetrisch bzgl. der Achse D ausgebildet ist. Auch dieses Merkmal sorgt für eine bessere Verteilung von Kräften bei Stoßbeschleunigungen.

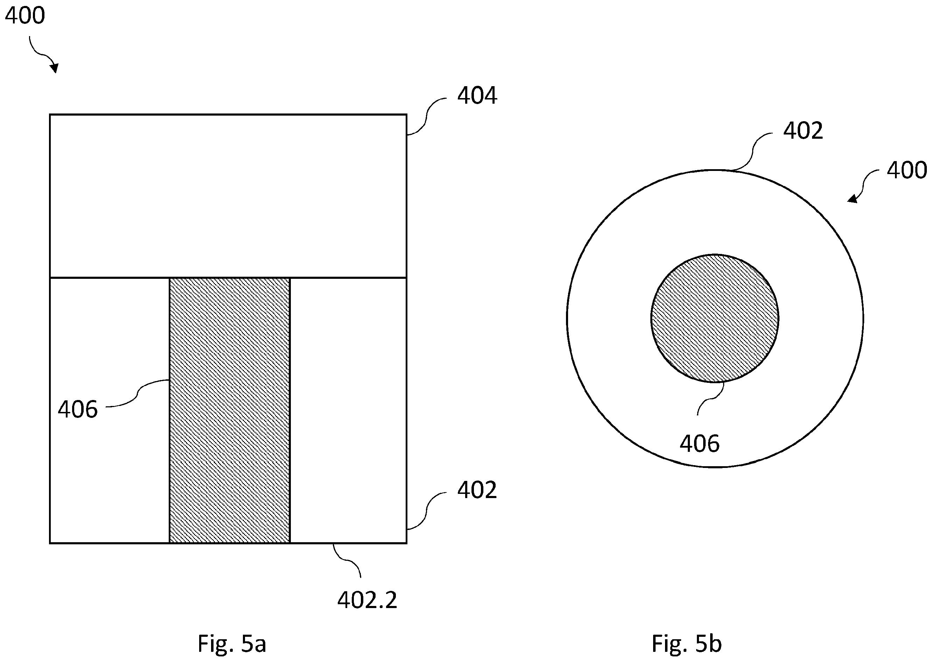

Im Folgenden wird ein lokaler Resonator mit einem Führungselement in Bezugnahme auf Fig. 5a und Fig. 5b beschrieben.

Fig. 5a zeigt ein Querschnitt entlang einer Längsachse durch einen lokalen Resonator 400 mit einem Führungselement 406. Fig. 5b zeigt eine Unterseite des in Fig. 5a dargestellten lokalen Resonators.

Der lokale Resonator 400 ist aufgebaut aus einer schwingenden Masse 404 und einem Federelement 402. Die schwingende Masse 404 ist in diesem Beispiel eine Stahlmasse mit einer Masse von 50 g. Eine relevante Masse von 50g ist besonders vorteilhaft, um eine relevante Frequenz im Bereich von 100 Hz zu verwirklichen und gleichzeitig eine relative zusätzliche Masse durch die lokalen Resonatoren zu begrenzen. Das Federelement 402 ist ein Elastomerhohlzylinder. Der lokale Resonator 400 wird dabei an einer Unterseite 402.2 des Federelementes 402 mit einer Trägeroberfläche, beispielsweise durch Kleben, verbunden. Weiter umfasst der lokale Resonator 400 ein Führungselement 406, in diesem Fall ein metallischer Pin, der innerhalb des Elastomerhohlzylinders 402 angeordnet ist. Dieser metallische Pin 406 ist ausgebildet, Amplituden lateraler Schwingungen der schwingenden Masse 404 zu begrenzen.

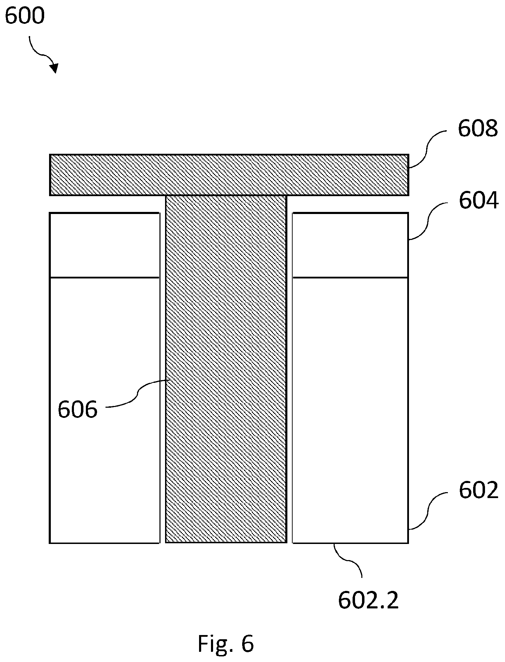

Zusätzlich lässt sich das Führungselement auch kombinieren mit einer Schocksicherung. Ein Ausführungsbeispiel solch eines Resonators wird im Folgenden mit Bezug auf Fig. 6 beschrieben.

Fig. 6 zeigt einen Querschnitt durch eine weitere Ausführungsform eines Resonators 600 mit Führungselement 606.

Der lokale Resonator 600 ist ebenfalls aus einer schwingenden Masse 604 und einem Federelement 602 aufgebaut. Das Federelement 602 ist ein Elastomerhohlzylinder, die eine Unterseite 602.2 aufweist, mit deren Hilfe der lokale Resonator auf einer Trägeroberfläche befestigt werden kann. Die schwingende Masse 604 ist dabei ebenfalls als ein Hohlzylinder ausgebildet. Innerhalb des durch schwingender Masse 604 und Federelement 602 ausgebildeten gemeinsamen Hohlzylinders befindet sich ein Führungselement 606, hier ein metallischer Pin, welcher ebenfalls an der Trägeroberfläche befestigt werden kann. Verbunden mit dem Führungselement 606 ist ein Schocksicherungselement 608, das aus einer metallischen Scheibe besteht und den Hohlzylinder in vertikaler Richtung überragt. Das Schocksicherungselement 608 bildet dabei einen vertikalen Anschlag, der eine Überdehnung des Federelementes 602 in vertikaler Richtung verhindert. Dies ist insbesondere interessant, um den lokalen Resonator gegen die Schockbeschleunigungen während des Starts einer Trägerrakete zu sichern. Der lokale Resonator 600 sollte dabei idealerweise beim Start der Trägerrakete so relativ zur Trägerrakete angeordnet sein, dass die Beschleunigung der Trägerrakete während des Starts entlang einer Längsachse des Führungselementes 606 wirkt.

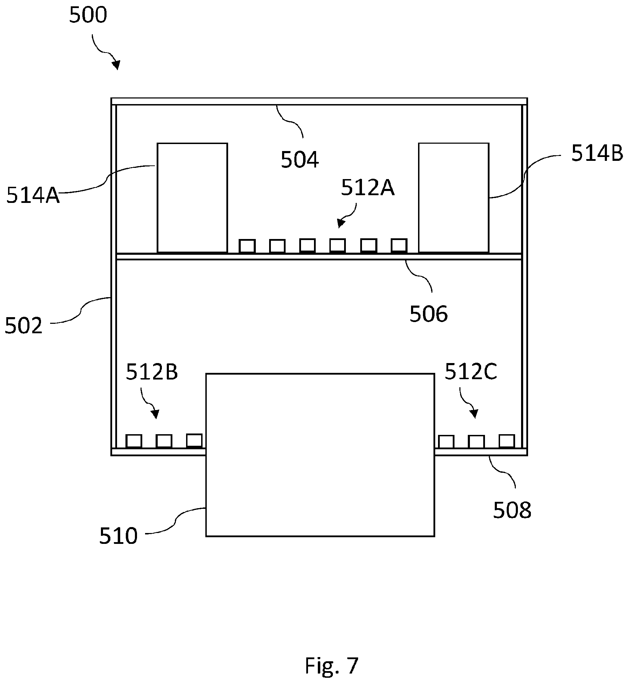

Fig. 7 zeigt eine schematische Darstellung eines Raumfahrzeuges 500 mit einer Trägervorrichtung 502 gemäß der Idee dieser Offenbarung.

Das Raumfahrzeug 500 ist ein Satellit. Die Trägervorrichtung 502 umfasst ferner drei Trägerplatten 504, 506 und 508, die parallel zueinander angeordnet sind und über vertikale Verstrebungen miteinander verbunden sind. Weiterhin umfasst das Raumfahrzeug 500 eine Nutzlast 514A und 514B, hier ein Mess- und ein Telekommunikationssystem, die auf der Trägerplatte 506 angeordnet sind. Weiterhin umfasst die Vorrichtung eine Antriebseinheit 510, die mit der Trägerplatte 508 mechanisch verbunden ist. Von der Antriebseinheit 510 generierte Vibrationen können sich über die Trägerplatte 508, die vertikale Verstrebung und die Trägerplatte 506 bis hin zur Nutzlast 514A und 514B verbreiten. Um einen Einfluss dieser mechanischen Schwingungen auf die Nutzlast 514A und 514B zu reduzieren, umfasst die Trägervorrichtung 502 ferner eine Anordnung lokaler Resonatoren 512A, die auf einer Oberfläche der Trägerplatte 506 angeordnet ist. Weiter umfasst die Trägervorrichtung 502 zwei Anordnungen lokaler Resonatoren 512B und 512C, die auf einer Oberfläche der Trägerplatte 508 und damit auf einem Übertragungsweg der mechanischen Schwingungen zwischen der Nutzlast und dem schwingungsgenerierenden Element angeordnet sind. In dem hier gezeigten Ausführungsbeispiel weisen die einzelnen Resonatoren geringfügig unterschiedliche Frequenzabstimmung auf, so dass das mindestens eine Stoppband verbreitert wird.

Zusammenfassen betrifft diese Offenbarung eine Trägervorrichtung 100 zum Befestigen einer Nutzlast in Raumfahrzeugen mit einer Trägeroberfläche 102, wobei die Trägeroberfläche 102 mit einer Anordnung von lokalen Resonatoren 108 versehen ist, die jeweils mindestens eine schwingende Masse 322 und ein Federelement 324, das die schwingende Masse 322 mit der Trägeroberfläche 102 verbindet, umfassen und darauf abgestimmt sind, mindestens eine Resonanz in einem relevanten Frequenzbereich um eine erste relevante Frequenz aufzuweisen. Zudem erzeugt die Anordnung der lokalen Resonatoren 108 mindestens ein Stoppband für elastische Wellenausbreitung in der Trägeroberfläche 102 um mindestens die erste relevante Frequenz.

## Patentansprüche

1. Trägervorrichtung (100) zum Befestigen einer Nutzlast in einem Raumfahrzeug, umfassend:
eine Trägeroberfläche (102), wobei
die Trägeroberfläche (102) mit einer Anordnung von lokalen Resonatoren (108) versehen ist, die jeweils mindestens eine schwingende Masse (322) und ein Federelement (324), das die schwingende Masse (322) mit der Trägeroberfläche (102) verbindet, umfassen und darauf abgestimmt sind, mindestens eine Resonanz in einem relevanten Frequenzbereich um eine erste relevante Frequenz aufzuweisen,
wobei die Anordnung der lokalen Resonatoren (108) mindestens ein Stoppband für elastische Wellenausbreitung in der Trägeroberfläche (102) um mindestens die erste relevante Frequenz erzeugt.

2. Trägervorrichtung (100) nach Anspruch 1, **dadurch gekennzeichnet, dass** die Trägervorrichtung (102) eine Trägerplatte umfasst und die Trägeroberfläche (102) eine Oberfläche der Trägerplatte ist.

3. Trägervorrichtung (200) nach Anspruch 1, **dadurch gekennzeichnet, dass** die Trägervorrichtung umfasst:
eine Basisträgerplatte (202),
eine Trägerplatte (204), und
eine isostatische Lagerungsanordnung (206A, 206B), die die Basisträgerplatte (202) und die Trägerplatte (204) mechanisch miteinander verbindet; wobei
die Resonatoren (208A, 208B, 208C) auf der Basisträgerplatte (202) und/oder der Trägerplatte (204) angebracht sind.

4. Trägervorrichtung (100) nach Anspruch 2 oder 3, **dadurch gekennzeichnet, dass** die Trägerplatte eine Ankopplungsschnittstelle (104, 106) zur Befestigung der Nutzlast aufweist.

5. Trägervorrichtung (200) nach Anspruch 3 oder 4, **dadurch gekennzeichnet, dass**
die Anordnung lokaler Resonatoren (208A, 208B, 208C) auf einer Oberfläche der Basisträgerplatte (202) um eine erste Ankopplungsschnittstelle, über die die Basisträgerplatte (202) und ein Lagerungselement (206A, 206B) der isostatischen Lagerungsanordnung miteinander verbunden sind, angeordnet ist und/oder
die Anordnung lokaler Resonatoren (208A, 208B, 208C) auf einer Oberfläche der Trägerplatte (204) um eine zweite Ankopplungsschnittstelle, über die die Trägerplatte (204) und ein Lagerungselement (208A, 208B, 208C) der isostatischen Lagerungsanordnung miteinander verbunden sind, angeordnet ist.

6. Trägervorrichtung (100) nach einem der vorhergehenden Ansprüche, **dadurch gekennzeichnet, dass** die Anordnung der lokalen Resonatoren (108) periodisch ist.

7. Trägervorrichtung (100) nach einem der vorhergehenden Ansprüche, **dadurch gekennzeichnet, dass** ein Abstand (A) der lokalen Resonatoren zueinander kleiner als eine halbe Wellenlänge der ersten relevanten Frequenz ist.

8. Trägervorrichtung nach Anspruch 6 oder 7, **dadurch gekennzeichnet, dass** sich durch die periodische Anordnung der lokalen Resonatoren (108) aufgrund von Bragg-Streuung mindestens ein weiteres Stoppband für elastische Wellenausbreitung um mindestens eine weitere Frequenz ausbildet.

9. Trägervorrichtung (100) nach einem der vorhergehenden Ansprüche, **dadurch gekennzeichnet, dass** die erste relevante Frequenz in einem Frequenzbereich zwischen 50 Hz und 10000 Hz, insbesondere zwischen 50 und 500 Hz, liegt.

10. Trägervorrichtung (100) nach einem der vorhergehenden Ansprüche, **dadurch gekennzeichnet, dass** die Anordnung von lokalen Resonatoren (108) so beschaffen ist und/oder die lokalen Resonatoren so ausgebildet sind, dass mehrere Stoppbänder für die elastische Wellenausbreitung in der Trägeroberfläche (102) erzeugt werden.

11. Trägervorrichtung (100) nach einem der vorhergehenden Ansprüche, **dadurch gekennzeichnet, dass** die einzelnen Resonatoren (108.2) eine geringfügig unterschiedliche Frequenzabstimmung aufweisen, so dass das mindestens eine Stoppband verbreitert wird.

12. Trägervorrichtung (100) nach einem der vorhergehenden Ansprüche, **dadurch gekennzeichnet, dass** die lokalen Resonatoren (108.2) ausgebildet sind, Schockbelastungen mit Beschleunigungen bis zu 2000-mal einer Erdbeschleunigung standzuhalten.

13. Trägervorrichtung (100) nach einem der vorhergehenden Ansprüche, **dadurch gekennzeichnet, dass** zumindest ein Teil einer Ankopplungsschnittstelle (326) zur Befestigung eines lokalen Resonators (320) auf der Trägeroberfläche (102) mit einer zur Trägeroberfläche lotrechten Projektion der schwingenden Masse (322) auf die Trägeroberfläche (102) überlappt.

14. Trägervorrichtung (100) nach einem der vorhergehenden Ansprüche, **dadurch gekennzeichnet, dass** eine oder mehrere Ankopplungsschnittstellen (324.2) zur Befestigung eines lokalen Resonators symmetrisch bzgl. einer Achse (D), die senkrecht zur Trägeroberfläche (102) und durch einen Schwerpunkt der schwingenden Masse (342) des lokalen Resonators (340) verläuft, angeordnet ist.

15. Trägervorrichtung (100) nach einem der vorhergehenden Ansprüche, **dadurch gekennzeichnet, dass** ein lokaler Resonator (400) ein zusätzliches Führungselement (406) aufweist, das Schwingungen des lokalen Resonators (400) in einem zweiten relevanten Frequenzbereich reduziert und/oder Schwingungen des lokalen Resonators (400) außerhalb einer Vorzugsschwingrichtung reduziert.

16. Trägervorrichtung (100) nach Anspruch 15, **dadurch gekennzeichnet, dass** das Federelement (402) mindestens einer der lokalen Resonatoren (400) einen Hohlraum aufweist und das Führungselement (406) innerhalb des Hohlraums angeordnet ist.

17. Raumfahrzeug (500) umfassend eine Trägervorrichtung (502) nach einem der vorhergehenden Ansprüche.

18. Raumfahrzeug (500) nach Anspruch 17, **dadurch gekennzeichnet, dass** das Raumfahrzeug (500) weiter aufweist:
eine Nutzlast (514A, 514B), die an einer Nutzlastankopplungsschnittstelle mit der Trägeroberfläche mechanisch verbunden ist, und
ein schwingungsgenerierendes Element (510), das an einer Elementankopplungsschnittstelle mit der Trägeroberfläche mechanisch verbunden ist; wobei
zumindest ein Teil der Anordnung der lokalen Resonatoren (512B, 512C) zwischen der Nutzlastankopplungsschnittstelle und der Elementankopplungsstelle angeordnet ist.

## Claims

1. A carrier device (100) for securing a payload in a spacecraft, comprising:
a carrier surface (102), wherein
the carrier surface (102) is provided with an arrangement of local resonators (108), each of which comprises at least one oscillating mass (322) and one spring element (324) that connects the oscillating mass (322) to the carrier surface (102), and are adapted to exhibit at least one resonance in a relevant frequency range around a first relevant frequency,
wherein the arrangement of the local resonators (108) generates at least one stop band for elastic wave propagation in the carrier surface (102) around at least the first relevant frequency.

2. The carrier device (100) according to claim 1, **characterised in that** the carrier device (102) comprises a carrier plate, and the carrier surface (102) is a surface of the carrier plate.

3. The carrier device (200) according to claim 1, **characterised in that** the carrier device comprises:
a basis carrier plate (202),
a carrier plate (204), and
an isostatic bearing arrangement (206A, 206B) that mechanically connects the basis carrier plate (202) and the carrier plate (204) to each other; wherein
the resonators (208A, 208B, 208C) are mounted on the basis carrier plate (202) and/or the carrier plate (204).

4. The carrier device (100) according to claim 2 or 3, **characterised in that** the carrier plate includes a coupling interface (104, 106) for securing the payload.

5. The carrier device (200) according to claim 3 or 4, **characterised in that**
the arrangement of local resonators (208A, 208B, 208C) is arranged on a surface of the basis carrier plate (202) around a first coupling interface, via which the basis carrier plate (202) and a bearing member (206A, 206B) of the isostatic bearing arrangement are connected to one another, and/or
the arrangement of local resonators (208A, 208B, 208C) is arranged on a surface of the carrier plate (204) around a second coupling interface, via which the carrier plate (204) and a bearing member (208A, 208B, 208C) of the isostatic bearing arrangement are connected to one another.

6. The carrier device (100) according to any one of the preceding claims, **characterised in that** the arrangement of the local resonators (108) is periodic.

7. The carrier device (100) according to any one of the preceding claims, **characterised in that** a distance (A) between the local resonators is less than half a wavelength of the first relevant frequency.

8. The carrier device according to claim 6 or 7, **characterised in that**, due to the periodic arrangement of the local resonators (108), at least one additional stopband for elastic wave propagation is formed by Bragg scattering around at least one additional frequency.

9. The carrier device (100) according to any one of the preceding claims, **characterised in that** the first relevant frequency lies within a frequency range between 50 Hz and 10,000 Hz, in particular between 50 and 500 Hz.

10. The carrier device (100) according to any one of the preceding claims, **characterised in that** the arrangement of the local resonators (108) is such and/or the local resonators are configured such that multiple stopbands are generated for the elastic wave propagation in the carrier surface (102).

11. The carrier device (100) according to any one of the preceding claims, **characterised in that** the individual resonators (108.2) have a slightly different frequency tuning, such that the at least one stop band is widened.

12. The carrier device (100) according to any one of the preceding claims, **characterised in that** the local resonators (108.2) are configured to withstand shock loads with accelerations of up to 2,000 times gravitational acceleration.

13. The carrier device (100) according to any one of the preceding claims, **characterised in that** at least a part of a coupling interface (326) for attaching a local resonator (320) on the carrier surface (102) overlaps with an orthogonal projection of the oscillating mass (322) onto the carrier surface (102).

14. The carrier device (100) according to any one of the preceding claims, **characterised in that** one or more coupling interfaces (324.2) for attaching a local resonator are arranged symmetrically with respect to an axis (D) that is perpendicular to the carrier surface (102) and passes through the centre of gravity of the oscillating mass (342) of the local resonator (340).

15. The carrier device (100) according to any one of the preceding claims, **characterised in that** a local resonator (400) includes an additional guide element (406) that reduces oscillations of the local resonator (400) in a second relevant frequency range and/or reduces oscillations of the local resonator (400) outside a preferred direction of oscillation.

16. The carrier device (100) according to claim 15, **characterised in that** the spring element (402) of at least one of the local resonators (400) has a cavity, and the guide element (406) is arranged within the cavity.

17. A spacecraft (500) comprising a carrier device (502) in accordance with any one of the preceding claims.

18. A spacecraft (500) in accordance with claim 17, **characterised in that** the spacecraft (500) also comprises:
a payload (514A, 514B), which is mechanically connected to the carrier surface at a payload coupling interface, and
an oscillation-generating element (510) that is mechanically connected to the carrier surface at an element-coupling interface; wherein
at least a portion of the arrangement of local resonators (512B, 512C) is arranged between the payload coupling interface and the element coupling point.

## Revendications

1. Dispositif porteur (100) permettant de fixer une charge utile à un engin spatial, comprenant:
une surface de support (102), dans lequel
la surface de support (102) est munie d'un agencement de résonateurs locaux (108) qui comprennent respectivement au moins une masse oscillante (322) et un élément formant ressort (324) reliant la masse oscillante (322) à la surface de support (102) et sont accordés pour présenter au moins une résonance dans une plage de fréquences pertinente autour d'une première fréquence pertinente,
dans lequel l'agencement de résonateurs locaux (108) génère au moins une bande d'arrêt pour la propagation élastique des ondes dans la surface de support (102) autour d'au moins la première fréquence pertinente.

2. Dispositif porteur (100) selon la revendication 1, **caractérisé en ce que** le dispositif porteur (102) comprend une plaque de support et la surface de support (102) est une surface de la plaque de support.

3. Dispositif porteur (200) selon la revendication 1, **caractérisé en ce que** le dispositif porteur comprend:
une plaque de support de base (202),
une plaque de support (204), et
un agencement de stockage isostatique (206A, 206B) qui relie mécaniquement entre elles la plaque de support de base (202) et la plaque de support (204); dans lequel
les résonateurs (208A, 208B, 208C) sont montés sur la plaque de support de base (202) et/ou la plaque de support (204).

4. Dispositif porteur (100) selon la revendication 2 ou 3, **caractérisé en ce que** la plaque de support présente une interface de couplage (104, 106) permettant de fixer la charge utile.

5. Dispositif porteur (200) selon la revendication 3 ou 4, **caractérisé en ce que**
l'agencement de résonateurs locaux (208A, 208B, 208C) est disposé sur une surface de la plaque de support de base (202) autour d'une première interface de couplage par l'intermédiaire de laquelle la plaque de support de base (202) et un élément de stockage (206A, 206B) de l'agencement de stockage isostatique sont reliés entre eux, et/ou
l'agencement de résonateurs locaux (208A, 208B, 208C) est disposé sur une surface de la plaque de support (204) autour d'une seconde interface de couplage par l'intermédiaire de laquelle la plaque de support (204) et un élément de stockage (208A, 208B, 208C) de l'agencement de stockage isostatique sont reliés entre eux.

6. Dispositif porteur (100) selon l'une quelconque des revendications précédentes, **caractérisé en ce que** l'agencement de résonateurs locaux (108) est périodique.

7. Dispositif porteur (100) selon l'une quelconque des revendications précédentes, **caractérisé en ce que** la distance (A) entre les résonateurs locaux est inférieure à la moitié de la longueur d'onde de la première fréquence pertinente.

8. Dispositif porteur selon la revendication 6 ou 7, **caractérisé en ce qu'**au moins une bande d'arrêt supplémentaire pour la propagation élastique des ondes est formée autour d'au moins une fréquence supplémentaire grâce à l'agencement périodique des résonateurs locaux (108) du fait de la diffusion de Bragg.

9. Dispositif porteur (100) selon l'une quelconque des revendications précédentes, **caractérisé en ce que** la première fréquence pertinente se situe dans une plage de fréquences comprise entre 50 Hz et 10000 Hz, en particulier entre 50 et 500 Hz.

10. Dispositif porteur (100) selon l'une quelconque des revendications précédentes, **caractérisé en ce que** l'agencement de résonateurs locaux (108) est fourni de sorte que, et/ou les résonateurs locaux sont conçus de sorte que, plusieurs bandes d'arrêt pour la propagation élastique des ondes sont générées dans la surface de support (102).

11. Dispositif porteur (100) selon l'une quelconque des revendications précédentes, **caractérisé en ce que** les résonateurs individuels (108.2) présentent un accord de fréquence légèrement différent, de sorte que la au moins une bande d'arrêt est élargie.

12. Dispositif porteur (100) selon l'une quelconque des revendications précédentes, **caractérisé en ce que** les résonateurs locaux (108.2) sont conçus pour résister à des charges de choc avec des accélérations allant jusqu'à 2000 fois l'accélération de la pesanteur terrestre.

13. Dispositif porteur (100) selon l'une quelconque des revendications précédentes, **caractérisé en ce qu'**au moins une partie d'une interface de couplage (326) permettant de fixer un résonateur local (320) à la surface de support (102) chevauche une projection, perpendiculairement à la surface de support, de la masse oscillante (322) sur la surface de support (102).

14. Dispositif porteur (100) selon l'une quelconque des revendications précédentes, **caractérisé en ce qu'**une ou plusieurs interface(s) de couplage (324.2) permettant de fixer un résonateur local est/sont disposée(s) symétriquement par rapport à un axe (D) qui est perpendiculaire à la surface de support (102) et passe par un centre de gravité de la masse oscillante (342) du résonateur local (340).

15. Dispositif porteur (100) selon l'une quelconque des revendications précédentes, **caractérisé en ce qu'**un résonateur local (400) présente un élément de guidage (406) supplémentaire qui réduit les oscillations du résonateur local (400) dans une seconde plage de fréquences pertinente et/ou réduit les oscillations du résonateur local (400) en dehors d'une direction d'oscillation préférée.

16. Dispositif porteur (100) selon la revendication 15, **caractérisé en ce que** l'élément formant ressort (402) d'au moins un des résonateurs locaux (400) présente une cavité et l'élément de guidage (406) est disposé à l'intérieur de la cavité.

17. Engin spatial (500) comprenant un dispositif porteur (502) selon l'une quelconque des revendications précédentes.

18. Engin spatial (500) selon la revendication 17, **caractérisé en ce que** l'engin spatial (500) présente en outre:
une charge utile (514A, 514B) qui est mécaniquement reliée à la surface de support au niveau d'une interface de couplage de charge utile, et
un élément générateur d'oscillations (510) qui est relié mécaniquement à la surface de support au niveau d'une interface de couplage d'élément ; dans lequel
au moins une partie de l'agencement de résonateurs locaux (512B, 512C) est disposée entre l'interface de couplage de charge utile et l'interface de couplage d'élément.
